# EUROPÄISCHE PATENTSCHRIFT

(11) **EP 0 672 228 B1**
(45) Veröffentlichungstag und Bekanntmachung des Hinweises auf die Patenterteilung: **23.12.1998**
(21) Anmeldenummer: 94928293.3
(22) Anmeldetag: 29.09.1994
(51) Int. Cl.: F16L 37/088, E03C 1/02, E03C 1/04

(54) **ANSCHLUSSKUPPLUNG**
CONNECTING COUPLING
RACCORD D'ACCOUPLEMENT

(30) Priorität: 01.10.1993 DE 4334153
(43) Veröffentlichungstag der Anmeldung: 20.09.1995
(73) Patentinhaber: IDEAL-STANDARD GMBH, 53121 Bonn (DE)
(72) Erfinder: MÖNCH, Heiner, D-54344 Kenn (DE)
(74) Vertreter: Radwer, Dieter
(86) Internationale Anmeldenummer: DE9401181
(87) Internationale Veröffentlichungsnummer: WO9510003

(56) Entgegenhaltungen:
- EP-A- 0 530 778
- DE-A- 1 918 330
- DE-A- 3 440 753
- DE-A- 4 142 640
- FR-A- 1 398 823
- US-A- 5 129 389

## Beschreibung

Die Erfindung betrifft eine mehrteilige Anschlußkupplung, bestehend aus mindestens einer Tülle und einem Kupplungsstück zum gegenseitigen Verbinden von Schlauchleitungen, insbesondere zum druckdichten Anschluß der Schlauchleitung einer Geschirrspülbrause an einer Einhebel-Einlochmischbatterie für einen Spültisch.

Zum gegenseitigen Verbinden von Schlauchleitungen oder zum schnellen und leichten Anschließen einer Schlauchleitung an ein Auslaufventil sind bereits Kupplungen mit einem Bajonettverschluß bekannt, die aus einer in die Schlauchleitung einzusetzenden Schlauchtülle und einem die Schlauchtülle übergreifenden Kupplungsstück bestehen. Die Schlauchtülle weist ein im Durchmesser vergrößertes Kopfteil auf, in das stirnseitig eine Dichtung eingelegt ist, während das übergreifende Kupplungsstück an der hinteren Stirnfläche des Kopfteiles anliegt. Das Kupplungsstück besitzt auf seiner Anschlußstirnseite zwei Aufnahmenuten und zwei hakenförmige Kupplungszapfen, die jeweils in vorhandene Nuten des auf der anzuschließenden Schlauchleitung oder auf dem Auslaufventil befindlichen Kupplungsstückes gleicher Ausbildung eingreifen. Die druckdichte Verbindung wird durch gegeneinenander gerichtetes Verdrehen der Kupplungsstücke hergestellt, wobei die in den Schlauchleitungen eingesetzten Schlauchtüllen aneinander gepreßt werden und vermittels der stirnseitig angeordneten Dichtung eine druckdichte Verbindung herstellen. Diese Bajonettkupplungen sind sehr kompakt ausgebildet und überwiegend aus einem Metall hergestellt, da die relativ hohen Zug- und Druckkräfte nur durch die beiden Kupplungszapfen aufgenommen und übertragen werden. Die Bajonettkupplungen sind daher in ihrer Herstellung relativ teuer und aufgrund ihrer kompakten Ausbildung nicht für alle Anwendungsfälle, beispielsweise bei geringen Achsabständen zwischen den anzuschließenden oder zu verbindenden Leitungen, geeignet.

Eine ebenfalls bekannte aus Kunststoff hergestellte Anschlußkupplung ist ebenfalls zweiteilig ausgebildet. Die in die zu verbindende Schlauchleitung einzusetzende Schlauchtülle besitzt einen zylindrischen Abschnitt mit einem in eine Nut eingesetzten O-Ring, an den sich ein Dicht- und Anschlagkegel mit einem nachfolgenden weiteren zylindrischen Abschnitt anschließt. Zwischen dem Dichtkegel und dem nachfolgenden zylindrischen Abschnitt entsteht durch diese konstruktive Ausbildung eine Schulter, die von stirnseitig angeordneten Haltekrallen des Kupplungsstückes übergriffen wird. Das Kupplungsstück weist eine Bohrung zur Aufnahme des zylindrischen Anschlußabschnittes und des Dichtkegels der Schlauchtülle auf und ist an ihrer Kupplungsstirnseite mit den vorerwähnten Haltekrallen versehen. Die elastisch ausgebildeten, leicht federnden Haltekrallen werden durch Keilwirkung eines aufgesetzten, mittels Feder vorgespannten, axial verschiebbaren Betätigungsringes in eine Offen-Stellung zum Einstecken der Schlauchtülle in das Kupplungsstück freigesetzt und in eine Schließstellung arretiert, in der sie die druckdichte Verbindung mit Hilfe der Federkraft der im Betätigungsring angeordneten Feder sichern. Diese Anschlußkupplung besitzt eine Reihe praktischer Vorteile. Sie ist jedoch insgesamt in ihrem konstruktiven Aufbau zu aufwendig und dadurch in den Entstehungskosten zu teuer. In einer Weiterbildung dieser vorstehend näher beschriebenen Anschlußkupplung besitzt die Schlauchtülle lediglich einen zylindrischen in das Kupplungsstück einzusetzenden Anschlußabschnitt, der mit einem in einer Nut befindlichen O-Ring und mit einer dahinterliegenden Sicherungsnut versehen ist. Das Kupplungsstück besitzt wiederum einen durch eine Feder vorgespannten Betätigungsring, der axial verschiebbar oder verdrehbar angeordnet sein kann. Zur Aufrechterhaltung einer druckdichten Verbindung bei eingesteckter Schlauchtülle sind in Durchbrüchen angeordnete Sperrkeile vorgesehen, die in die Sicherungsnut der Schlauchtülle eingreifen und durch Verschieben oder Verdrehen des Betätigungsringes in eine Offen- oder Sperrstellung gebracht weden können. Trotz der erreichten Reduzierung der baulichen Abmessungen ist diese Anschlußkupplung in bezug auf ihren konstruktiven Aufbau immer noch zu aufwendig und in ihrer Herstellung zu teuer.

Dreiteilige Anschlußkupplungen bestehend aus einem Kupplungsstück, einem Schlauchstück (Schlauchtülle) und einem Sicherungselement, die als sogenannte Schnellkupplungen zum druckdichten Verbinden und Anschließen von Rohr- und Schlauchleitungen untereinander und an sanitäre Auslaufarmaturen dienen, sind beispielsweise aus EP 0 530 778 A3, DE 41 42 640 A1, DE 34 40 753 A1, FR 1 398 823 und US 5 209 523 bekannt.

Bestimmungsgemäß wird das Kupplungsstück an eine Auslaufarmatur angeschlossen und das Schlauchstück zur Herstellung des leitungsseitigen Anschlusses in das Kupplungsstück eingesteckt, wobei das Sicherungelement zur Fixierung der gekuppelten Steckverbindung dient, um beispielsweise ein unbeabsichtigtes Lösen der Verbindung durch axiale, in Längsrichtung der Steckverbindung wirkende Kräfte (Zugkräfte) zu verhindern.

Während die an der Herstellung der Leitungsverbindung beteiligten Funktionsfläche der Kupplungs- und Schlauchstücke unterschiedliche Konfigurationen besitzen, kann bei den bekannten Lösungen zwischen Sicherungselementen, die eine U-förmige Konfiguration aufweisen und in die gekuppelte Anschlußverbindung eingesteckt werden und zwischen Sicherungselementen, die die gekuppelten Verbindungsstücke klammerartig umschließen, unterschieden werden.

Die U-förmig Sicherungselemente, die überwiegend aus einem federelastischen Metall hergestellt werden, haben neben den erhöhten Herstellungskosten den Nachteil, daß sie sich leicht aufweiten und dadurch keine gesicherte Verbindung mehr gewährleisten können. Außerdem ragen bei den U-förmigen Sicherungselementen regelmäßig Teile oder Abschnitte des Elementes aus den Kupplungshälften heraus, wodurch Möglichkeiten gegeben sind, daß das Sicherungselement unbeabsichtigt herausgelöst und die Verbindung ungewollt aufgehoben wird.

Diese Nachteile werden durch Sicherungselemente aufgehoben, die die Kupplungshälften klammerartig umschließen.

Ein solches Sicherungselement wird nach DE 41 42 640 Al durch ein Hülsenteil, das durch eine oder mehrere kreisförmige Federsektionen ersetzt werden kann, gebildet, an dem blockförmige Stützteile angelenkt sind.

Der wesentliche Nachteil dieser Lösung besteht darin, daß sie die ineinander gesteckten Kupplungshälften zu ihrer Sicherung nur bereichsweise und nicht vollständig umschließen. Durch ungünstig auftreffende Zug- und Druckkräfte kann sich die Kupplungsverbindung dadurch leicht lockern oder gar lösen. Die im Winkel von 120° zueinander versetzt angeordneten, blockförmigen Stützteile erfordern zudem einen höheren Fertigungsaufwand zur Herstellung der sie aufnehmenden Durchbrüche in den Kupplungshälften, wodurch sich die Fertigungskosten wiederum ungünstig erhöhen.

Dieser Sachstand trifft auch für das Sicherungselement nach US 5 129 389 zu, das für eine ganz spezifische Anwendung konzipiert ist und hinsichtlich der getroffenen konstruktiven Ausführung auf Elemente zur allgemeinen Sicherung von Kupplungsverbindungen der gattungsgemäßen Art nicht übertragen werden kann.

Der Erfindung liegt somit die Aufgabe zugrunde, eine weiter verbesserte Anschlußkupplung der eingangs genannten Gattung vorzuschlagen, die mit minimalstem Kostenaufwand herstellbar ist und ein schnelles und leichtes Anschließen oder Verbinden von Schlauchleitungen gestattet.

Erfindungsgemäß wird diese Aufgabe durch die im Anspruch 1 genannten Merkmale gelöst. Weitere vorteilhafte Ausbildungen der Erfindung sind in den Unteransprüchen 2 bis 7 angegeben.

Die vorgeschlagene Anschlußverbindung besitzt einen äußerst einfachen und rationellen Aufbau bei Gewährleistung einer sicheren Funktion. Neben einer erheblichen Verringerung des für die Herstellung notwendigen Einsatzmaterials und der aufzuwendenden Arbeitszeit wird durch die einfache konstruktive Gestaltung der für die Anschlußverbindung erforderliche Bauraum entscheidend reduziert. Dieser Vorteil ist insbesondere beim Anschluß einer Schlauchleitung an eine Mischbatterie, wo der vorhandene Bauraum ohnehin sehr knapp bemessen ist, von Bedeutung. Im Falle der Durchführung von Reparaturen oder zu Reinigungszwekken läßt sich die durch die vorgeschlagene Anschlußkupplung angeschlossene Hand-/Geschirrspülbrause schnell von der Mischbatterie demontieren und auch wieder anbringen.

Die Erfindung soll nachstehend an einem Ausführungsbeispiel näher erläutert werden. In den dazugehörigen Zeichnungen zeigen:
- Fig. 1: eine Einhebel-Spültischbatterie mit einer über eine Schlauchleitung an die Spültischbatterie angeschlossene Geschirrspülbrause unter Verwendung der erfindungsgemäßen Anschlußkupplung
- Fig. 2: das Kupplungsstück in Form eines in die Spültischbatterie eingesetzten Anschlußstückes in Längsschnitt
- Fig. 3: den Schnitt A-A aus Fig. 2
- Fig. 4: eine Schlauchleitung mit einer Schlauchtülle nach einer ersten Ausführungsform
- Fig. 5: das die Anschlußverbindung sichernde ringscheibenförmige Element
- Fig. 6: die durch das ringscheibenförmige Element gesicherte Anschlußverbindung
- Fig. 7: das Einsetzen des Sicherungselementes in die zusammengesteckten Kupplungsteile der Anschlußkupplung
- Fig. 8: eine zweite Ausführungsform der Schlauchtülle
- Fig. 9: den Längsschnitt durch die Tülle nach Fig. 8

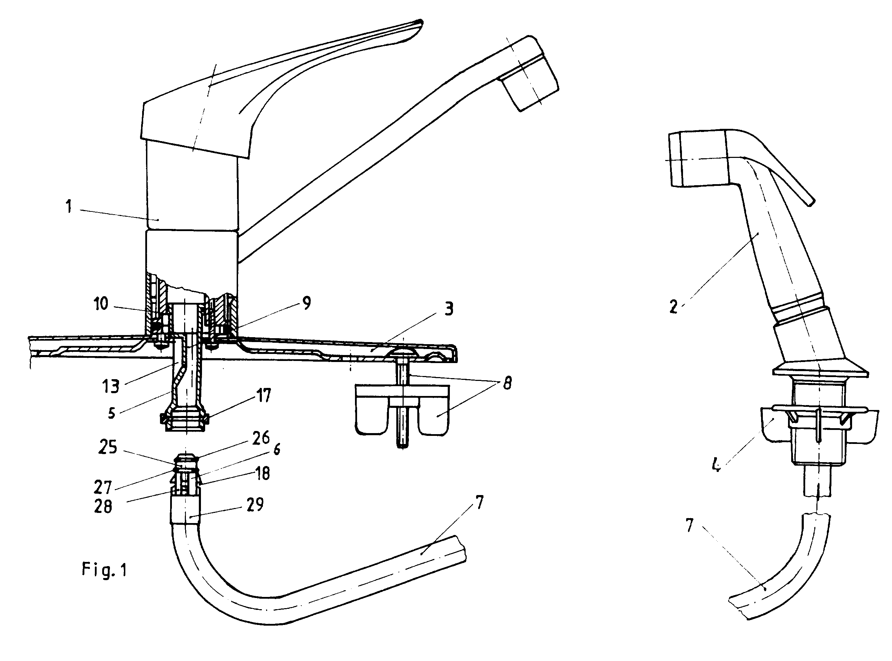

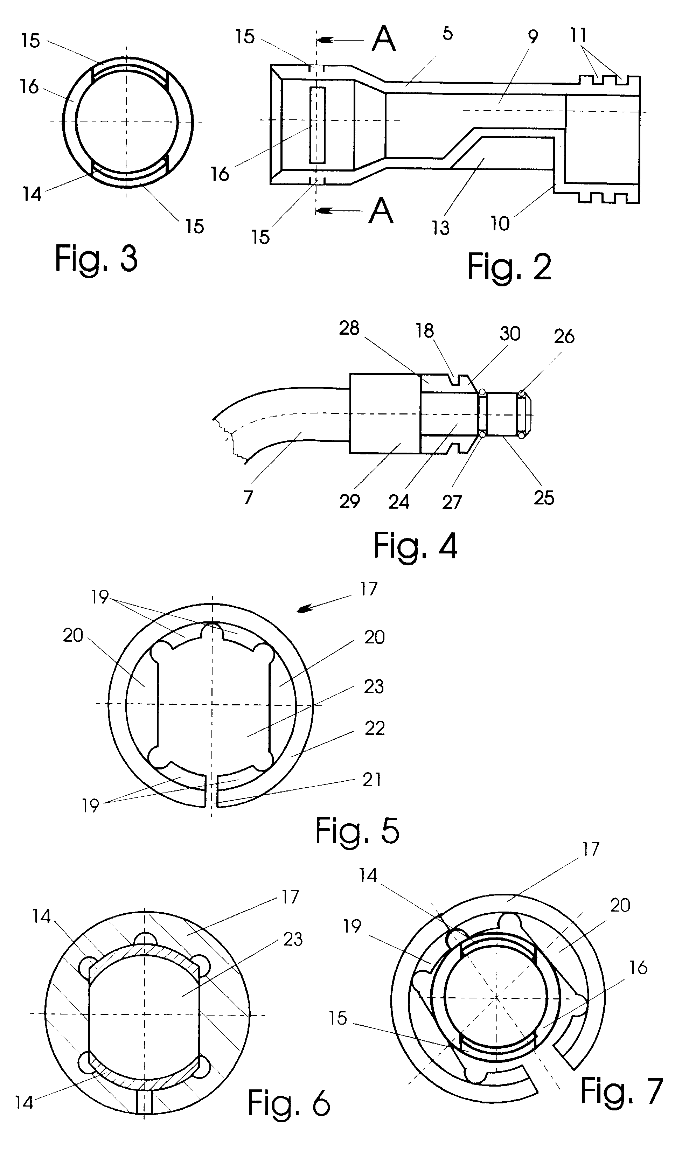

Die in Fig. 1 dargestellte Geschirrspülbrause 2 befindet sich in einer gesonderten Aufnahme 4 und ist über die Schlauchleitung 7 mit einer Einhebelspültischbatterie 1 verbunden. Die Spültischbatterie 1 ist vermittels der Grundplatte 3 und der Schrauben 8 an einem nicht dargestellten Spültisch befestigt. Zum Anschluß der Schlauchleitung 7 für die Geschirrspülbrause 2 ist im Gehäuse der Spültischbatterie 1 eine Kupplungsstück 5 in Form eines Rohrabschnittes 9 druckdicht eingesetzt. Zur Herstellung der Anschlußverbindung und zur Sicherung der in das Kupplungsstück 5 eingesetzten Schlauchtülle 6 besitzt der Anschlußbereich 14 des Kupplungsstückes 5 äußere Nutabschnitte 15 - Fig. 2 und 3 - und mindestens zwei, die Wandung des Kupplungsstückes 5 durchdringende schlitzförmige Durchbrüche 16. Der gegenüberliegende Endabschnitt 10 des als Anschlußstück ausgebildeten Kupplungsstückes 5 ist mit Nuten 11 zur Aufnahme von O-Ringen versehen. Zwischen dem Anschlußbereich 14 und dem Endabschnitt 10 befindet sich ein Rohrabschnitt 9 und ein äußerer Verbindungssteg 13, durch den das als Anschlußstück ausgebildete Kupplungsstück insgesamt stabilisiert wird.

Die in das Kupplungs-/Anschlußstück 5 einzusteckende Schlauchtülle 6 - Fig.4 - besitzt einen Grundkörper der eine Ringmanschette 29 und einen zylindrischen Anschlußabschnitt 24 einschließt. Auf den Anschlußabschnitt 24 ist ein Kunststoffteil 28 aufgesteckt, das mit einer Sicherungsnut 18, in die die Halte- und Rastzungen 19; 20 des Sicherungselementes 17 zur Fixierung der gekuppelten Steckverbindung eingreifen, und mit einem Anschlagkegel 30 versehen ist. Das aufgesteckte Kunststoffteil 28 wird durch einen Sicherungsring 27 arretiert, der im Anschlußabschnitt 24 in einer ersten Radialnut angeordnet ist und ein Abziehen des Kunststoffteiles 28 beim Lösen der Steckverbindung, beispielsweise zu Reparatur- oder Wartungsarbeiten an der Spültischbatterie 1 oder an den Zuführungsleitungen verhindert. Ein geringer Freiraum zwischen dem Anschlagkegel 30 des Kunststoffteiles 28 und dem Sicherungsring 28 ermöglicht eine geringe relative Axialbewegung der Schlauchtülle 6 in der durch den eingesteckten Sicherungselement 17 im Kupplungsstück 5 festgelegten Kunststoffteil 28 und erleichtert dadurch das Zusammenstecken und Lösen der mehrteiligen Anschlußkupplung.

Die dichte Verbindung zwischen der eingesteckten Schlauchtülle 6 und dem Kupplungsstück 5 wird durch eine 0-Ringdichtung 26 erzielt, die endseitig in einer weiteren Radialnut der Schlauchtülle 6 angeordnet und durch einen Bund 25 vom Sicherungsring 27 beabstandet ist.

Zur Aufrechterhaltung der druckdichten Anschlußverbindung zwischen dem Kupplungsstück 5 und der eingesteckten Schlauchtülle 6 wird das in Fig. 5 dargestellte Sicherungselement 17 auf das Kupplungsstück 5 aufgesetzt und durch eine von Hand aufzubringende Druckkraft die Haltezungen 19 in die äußere Ringnut 15 und die Sperrzungen 20 in die schlitzförmigen Durchbrüche 16 eingepreßt, die die Durchbrüche druchdringend infolge der federnden Ausbildung des Elementes 17 form- und kraftschlüssig in die Sicherungsnut 8 der Schlauchtülle 6 einrasten. In Fig. 7 ist der Vorgang des Auf- und Einsetzens des Sicherungselementes 17 dargestellt. Fig. 6 zeigt das eingesetzte Sicherungselement 17, mit dem die Schlauchtülle 6 und das Kupplungsstück 5 miteinander verbunden sind.

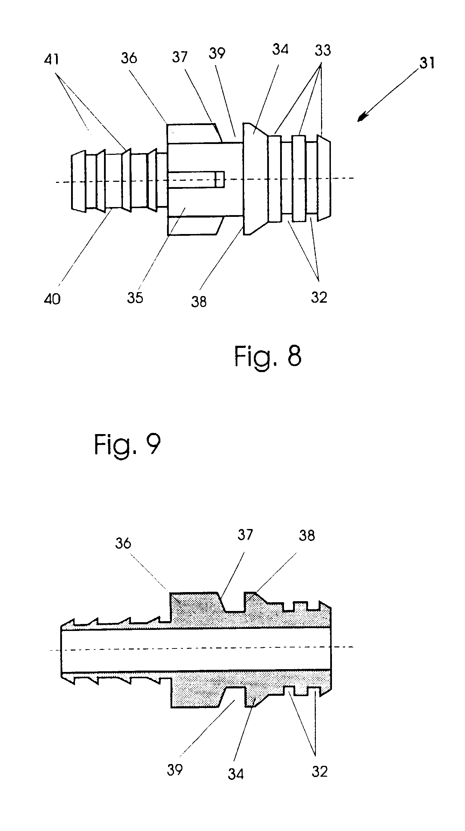

Das in Fig. 5 dargestellte Sicherungselement 17 ist vorzugsweise ein ringscheibenförmiger durch den eingebrachten Trennschlitz 21 aufweitbarer elastischer Körper, der mit einem verstärkten Außenrand 22 versehen ist. Innerhalb des ringscheibenförmigen Sicherungselementes 17 sind die bereits genannten Sperrzungen 20 und die Haltezungen 19 segmentartig angeordnet, wobei die Haltezungen 19 und die Sperrzungen 20 so gegenüber dem Außenrand ausgebildet sind, daß bei geschlossenem Sicherungselement 17 ein rechteckförmiger Öffnungsquerschnitt 23 vorhanden ist. Das Sicherungselement 17 wird vorzugsweise aus einem elastischen Kunststoff hergestellt und ist in der Lage, die an der Kupplungsstelle auftretenden Druck- und Zugkräfte aufzunehmen und sicher zu übertragen. Durch die in Fig. 8 und 9 dargestellte weiter vereinfachte Schlauchtülle 31 können zusätzliche Kosteneinsparungen erzielt werden. Die vorzugsweise als Kunststoffteil ausgebildete Schlauchtülle 31 besitzt einen zur Aufnahme von O-Ringen mit Nuten 32 versehenen zylindrischen Anschlußabschnitt 33, an den sich der Anschlagkegel 34 mit nachfolgendem zylindrischen Abschnitt 35 anschließen. Auf den zylindrischen Abschnitt 35 sind Stege 36 vorgesehen, deren Stirnseiten 37 zusammen mit der eine Schulter 38 bildenden Rückseite des Anschlagkegels 34 die Sicherungsnut 39, in denen die Sperrzungen des Sicherungselementes 17 eingreifen, begrenzen. Der Endabschnitt 40 der Schlauchtülle 31 ist mit Rippen 41 versehen, die in bekannter Weise die sichere Befestigung der Schlauchtülle in einer Schlauchleitung unterstützen.

### Bezugszeichenaufstellung

- 1: Einhebelspültischbatterie
- 2: Geschirrspülbrause
- 3: Grundplatte
- 4: Aufnahme
- 5: Kupplungsstücksstück
- 6: Schlauchtülle
- 7: Schlauchleitung
- 8: Befestigungsschrauben
- 9: Rohrabschnitt
- 10: Endabschnitt
- 11: Nuten
- 12 13: Verbindungssteg
- 14: Anschlußbereich
- 15: äußere Nutabschnitte
- 16: schlitzförmiger Durchbruch
- 17: Sicherungselement
- 18: Sicherungsnut
- 19: Haltezungen
- 20: Sperrzungen
- 21: Trennschlitz
- 22: Außenrand
- 23: Öffnungsquerschnitt
- 24: Anschlußabschnitt
- 25: Buchse
- 26: O-Ring
- 27: Sicherungsring
- 28: Kunststoffteil
- 29: Ringmanschette
- 30: Anschlagkegel
- 31: Schlauchtülle
- 32: Nuten
- 33: Anschlußabschnitt
- 34: Anschlagkegel
- 35: zylindrischer Abschnitt
- 36: Steg
- 37: Stirnseiten
- 38: Schulter
- 39: Sicherungsnut
- 40: Endabschnitt
- 41: Rippen

## Patentansprüche

1. Mehrteilige Anschlußkupplung, bestehend aus einer Tülle (6) mit einem in eine Schlauchleitung (7) einsetzbaren Endabschnitt (10) und einer aus mehreren, unterschiedlich figurierten Flächenteilen gebildeten, wenigstens einen O-Ring tragenden und eine äußere, umlaufende Sicherungsnut (18) aufweisende Außenkontur zum druckdichten, lösbaren Einsetzen in ein Kupplungsstück (5), das zur Aufnahme der Tülle (6) eine entsprechend ihrer Außenkontur ausgebildete Innenkontur aufweist und an eine Schlauchleitung (7) oder eine Auslaufarmatur (1) anschließbar ist, wobei das Kupplungsstück (5) in seinem Anschlußbereich (14) äußere Nutabschnitte (15) und mindestens zwei schlitzförmige Durchbrüche (16) aufweist, in denen ein die druckdichte Verbindung sicherndes Element (17) angeordnet ist, das in die Nutabschnitte (15) hineinragende Haltezungen (19) und die schlitzförmigen Durchbrüche (16) durchdringende, in eine Sicherungsnut (18) der Schlauchtülle (6) form- und kraftschlüssig eingreifende Sperrzungen (20) aufweist, **dadurch gekennzeichnet,** daß das Sicherungselement (17) ein scheibenförmiger, einseitig aufgetrennter Körper mit einem verstärkten Außenrand (22) ist und die Halte- und Sperrzungen (19; 20) mittig am Außenrand zur Mitte des Sicherungselementes hin gerichtet angebracht und gegenüber dem Außenrand (22) so ausgebildet und angeordnet sind, daß bei geschlossenem Sicherungselement (17) ein rechteckförmiger Öffnungsquerschnitt (23) vorhanden ist.

2. Anschlußkupplung nach Anspruch 1, **dadurch gekennzeichnet**, daß die Halte- und Sperrzungen (19; 20) segmentartig angeordnet sind.

3. Anschlußkupplung nach Anspruch 1 und 2, **dadurch gekennzeichnet**, daß das Sicherungselement (17) federnd und ein aus einem elastischen Kunststoff hergestelltes Teil ist.

4. Anschlußkupplung nach einem der Ansprüche 1 bis 3, **dadurch gekennzeichnet**, daß das Kupplungsstück (5) einen mittleren Rohrabschnitt (9) aufweist, der mit einem in die Mischbatterie (1) einsetzbaren Endabschnitt (10) abschließt, auf dessen Außenmantel Nuten (11) zur Aufnahme von O-Ringen vorgesehen sind und der Rohrabschnitt (9) durch einen äußeren Verbindungssteg (13) stabilisiert ist.

5. Anschlußkupplung nach einem der Ansprüche 1 bis 4, **dadurch gekennzeichnet**, daß die in das Kupplungsstück (5) einzusetzende Schlauchtülle (6) einen zylinderförmigen Anschlußabschnitt (24) besitzt, auf den ein Kunststoffteil (28) mit der Sicherungsnut (18) aufgesteckt ist, das durch einen Sicherungsring (27) arretiert wird und endseitig eine in einer Nut angeordnete O-Ringdichtung (26) trägt, die durch einen Bund (25) vom Sicherungsring (27) beabstandet ist.

6. Anschlußkupplung nach Anspruch 5, **dadurch gekennzeichnet**, daß das Kunststoffteil (28) einen stirnseitig angeordneten Anschlagkegel (30) aufweist und mit einer umlaufenden Sicherungsnut (18) versehen ist.

7. Anschlußkupplung nach einem der Ansprüche 1 bis 4, **dadurch gekennzeichnet**, daß die Schlauchtülle (31) einen zylinderförmigen, mit Nuten (32) zur Aufnahme von O-Ringen versehenen Anschlußabschnitt (33) besitzt, an den sich ein Anschlagkegel (34) und nachfolgend ein weiterer zylindrischer Abschnitt (35) anschließen, auf dessen Außenmantel Stege (36) angeordnet sind, die mit ihren Stirnseiten (37) und der rückwärtigen Schulter (38) des Anschlagkegels (34) eine Sicherungsnut (39) begrenzen.

## Claims

1. Multi-part connection coupling, consisting of a nozzle (6) with an end-piece (10) which can be placed in a tube (7) and a releasable coupling piece (5) made of a number of differently shaped pieces, with at least one of which bearing an o-ring and a safety groove (18) on the outside for pressure sealing. The exterior contour of this coupling piece (5) corresponds to the interior of the nozzle (6) and can be attached to a tube (7) or an armature. The coupling piece (5) has external grooves (15) and at least two slits (16), in which an element (17) which has position and tensile locking tongues (20), clips (19) which extend into the groove sections (15) and the slits (16) in a safety groove (18) of the tube nozzle (6), **characterized by**, the safety element (17) being a disk-shaped body, cut open on one side, with a reinforced exterior edge (22) and the clips and locking tongues (19; 20) in the middle of the outside edge are located toward the middle of the safety element and across from the outside edge (22) in such a manner that when the safety element (17) is closed, a rectangular opening (23) is shown by the cross-section.

2. Connecting coupling as described in claim 1, **characterized by**, the clips and locking tongues (19; 20) are set up in segments.

3. Connecting coupling as described in claims 1 and 2, **characterized by**, the safety element having a snapping action and made of flexible plastic.

4. Connecting coupling as described in claims 1 to 3, **characterized by**, the coupling piece (5) having a middle tube segment (9) which ends with an end-piece (10) which can be put into a faucet. The end-piece has grooves (11) on the outside for o-rings and the tube section (9) is stabilized by an exterior connecting link (13)

5. Connecting coupling as described in claims 1 to 4, **characterized by**, the tube nozzle (6) to be inserted into the connecting piece (5) having a cylinder-shaped connection element (24) on which a plastic part (28) with a safety groove is placed, which is caught by a safety ring (27) and bears an o-ring gasket (26) located in a groove which is separated from the safety ring (27) by a band (25).

6. Connecting coupling as described in claim 5, **characterized by**, the plastic part (28) having a stopping cone (30) toward the front and has a safety groove (18).

7. Connecting coupling as described in claims 1 to 4, **characterized by**, the tube nozzle (31) having a cylinder-shaped connecting end (33) with grooves (32) for holding o-rings on which a stopping cone (34) and subsequently another cylindrical section (35) on which the outer jacket links (36) are located which define a safety groove (39) with their front-sides (37) and the back shoulder (38) of the stopping cone (34).

## Revendications

1. Raccord d'accouplement à plusieurs éléments, se composant d'une douille (6) ayant une section finale (10) susceptible d'être insérée dans une conduite de tuyau souple (7) et un profil extérieur présentant une rainure de sécurité (18) extérieure l'entourant, portant au moins un anneau torique, formé de plusieurs éléments de surface configurés de façon différente et destiné à être inséré, de façon susceptible à être enlevé et en résistant à la pression, dans un raccord (5) qui présente un profil intérieur exécuté de façon correspondante à son profil extérieur afin de recevoir la douille (6) et qui est susceptible d'être raccordé à une conduite de tuyau souple (7) ou à un robinet de puisage (1), le raccord (5) présentant dans son domaine de raccordement (14) des sections en rainures extérieures (15) et au moins deux percements (16) en forme de fente dans lesquels est disposé un élément (17) garantissant la connexion résistante à la pression et présentant des languettes de maintien (19) pénétrant dans les sections en rainure (15) et des languettes d'arrêt (20) traversant les percements (16) en forme de fente et engageant, de par leur forme et leur force, une rainure de sécurité (18) de la douille de tuyau souple (6), **caractérisé par le fait que** l'élément de sécurité (17) est un corps en forme de disque coupé d'un côté et muni d'un bord extérieur (22) renforcé et **que** les languettes de maintien et d'arrêt (19;20) sont placées au centre sur le bord extérieur en étant dirigées vers le centre de l'élément de sécurité et **qu'**elles sont exécutées et disposées par rapport au bord extérieur (22) de telle façon qu'il se forme une section transversale en ouverture (23) rectangulaire lorsque l'élément de sécurité (17) est fermé.

2. Raccord d'accouplement selon la revendication 1, **caractérisé par le fait que** les languettes de maintien et d'arrêt (19;20) sont disposées à la façon de segments.

3. Raccord d'accouplement selon la revendication 1 et 2, **caractérisé par le fait que** l'élément de sécurité (17) est un élément élastique fabriqué en matière synthétique élastique.

4. Raccord d'accouplement selon l'une des revendications 1 à 3, **caractérisé par le fait que** le raccord (5) présente une section de tuyau médiane (9) fermée par une section finale (10) susceptible d'être insérée dans le mélangeur (1) à la surface de manteau de laquelle sont prévues des rainures (11) destinées à recevoir des anneaux toriques et à la surface de manteau de laquelle la section de tuyau (9) est stabilisée par un contrefort de connexion extérieur (13).

5. Raccord d'accouplement selon l'une des revendications 1 à 4, **caractérisé par le fait que** la douille de tuyau souple (6) devant être insérée dans le raccord (5) possède une section de raccordement (24) cylindrique sur laquelle est enfoncé un élément en matière synthétique (28) ayant une rainure de sécurité (18), arrêté par un anneau de sécurité (27) et portant du côté de son extrémité un anneau torique d'étanchéité (26) disposé dans une rainure et espacé de l'anneau de sécurité (27) par un collet (25).

6. Raccord d'accouplement selon la revendication 5, **caractérisé par le fait que** l'élément en matière synthétique (28) présente un cône de butée (30) disposé à l'avant et **qu'**il est pourvu d'une rainure de sécurité (18) l'entourant.

7. Raccord d'accouplement selon l'une des revendications 1 à 4, **caractérisé par le fait que** la douille de tuyau souple (31) possède une section de raccordement (33) cylindrique pourvue de rainures (32) destinées à recevoir des anneaux toriques et à laquelle est adjacent un cône de butée (34) et à la suite de celui-ci une autre section cylindrique (35) sur la surface de manteau de laquelle sont disposés des contreforts (36) délimitant une rainure de sécurité (39) avec leurs faces frontales (37) et l'épaulement arrière (38) du cône de butée (34).
